# EUROPÄISCHE PATENTANMELDUNG

(11) **EP 2 601 842 A1**
(43) Veröffentlichungstag der Anmeldung: **12.06.2013**
(21) Anmeldenummer: 11192445.2
(22) Anmeldetag: 07.12.2011
(51) Int. Cl.: A21B 5/04

(54) **Backvorrichtung für Baumkuchen**

(71) Anmelder: Pier, Arnold, 52525 Heinsberg (DE)
(72) Erfinder: Pier, Arnold, 52525 Heinsberg (DE)
(74) Vertreter: von Kreisler Selting Werner

(57) **Zusammenfassung**

Bei einer Backvorrichtung für Baumkuchen für den Haushaltsgebrauch, mit einem Gehäuse, das einen Backraum umschließt, mit einer Heizeinrichtung in dem Backraum, mit einer gegenüber der Heizeinrichtung in dem Backraum verschwenkbaren Teigwalze, die zwischen den freien Enden von zwei Schwenkarmen auswechselbar gelagert ist und um eine in dem Gehäuse gelagerten Schwenkachse für die Schwenkarme verschwenkbar ist, wobei die Teigwalze rotierend antreibbar ist, ist vorgesehen, dass die Schwenkachse als erste Antriebswelle zum Verschwenken der Teigwalze ausgebildet ist und dass auf mindestens einer Seite des Gehäuses eine zweite Antriebswelle für den rotierenden Antrieb der Teigwalze koaxial zu der Schwenkachse gelagert ist.

## Beschreibung

Die Erfindung betrifft eine Backvorrichtung für Baumkuchen nach dem Oberbegriff des Anspruchs 1 bzw. 4.

Bekannt sind Vorrichtungen zur Herstellung von Baumkuchen mit einer umlaufenden auswechselbaren Teigaufnahmewalze und mit Wärmequellen zum Backen des auf die Walze aufgebrachten Teiges in einem Gehäuse, in welchem die Walze von der Teigaufnahmestelle an die Heizquelle heran- und wieder zurückschwenkbar ist. Die Teigaufnahmestelle besteht aus einer Teigmulde. Wenn die Teigaufnahmewalze in Stellung über diese Mulde aufgebracht ist, gießt man mit einer Schöpfkelle Teigmasse über die sich langsam um sich selbst drehende Teigaufnahmewalze, bis sich ein durchgehender Teigmantel auf der Walze gebildet hat. Der Restteig tropft in die Mulde zurück. Die Walze wird dann an die Wärmequelle herangeschwenkt. Der obere Deckel der Maschine wird geschlossen. Nach ein bis zwei Minuten ist durch die Hitze der Heizquelle der jeweils aufgebrachte Teig gebacken. Der Deckel wird geöffnet und die Walze wird nach vorne über die Teigmulde geschwenkt und ein neuer Teig wird aufgetragen. Dieser Vorgang wird so lange fortgesetzt, bis der Baumkuchen die gewünschte Stärke hat und gebacken ist.

Aus der DE 397520 ist eine Backvorrichtung für Baumkuchen mit gegenüber einer Heizquelle verstellbarer Teigwalze bekannt, wobei die Teigwalze beiderseits des Backgehäuses in schwenkbaren Hebeln gelagert ist. Die Schwenkhebel können in unterschiedlichen Positionen arretiert werden. Zum Antrieb der Teigwalze ist an einem ihrer Enden eine Handkurbel vorgesehen, die sich außerhalb des Backinnenraums befindet oder durch einen Motorantrieb ersetzt sein kann.

Nachteilig ist dabei, dass zur Hindurchführung der Antriebswelle der Teigwalze seitliche Schlitze in dem Gehäuse vorgesehen sind, und dass der Motorantrieb auf der Antriebwelle der Teigwalze außen an der Maschine angebracht sitzt. Die im Gehäuse notwendigen Schlitze führen zu einem Energieverlust und stellen eine Verbrennungsgefahr dar. Über die Schlitze kann auch Schmutz in den Backinnenraum gelangen.

Ein weiterer Nachteil besteht darin, dass die Teigwalze in der von der Heizquelle entfernten Position manuell mit Teigmasse bestrichen werden muss, wodurch die Backvorrichtung in erheblichem Umfang verschmutzt wird.

Der Erfindung liegt daher die Aufgabe zugrunde, eine Backvorrichtung der eingangs genannten Art für den Haushaltsgebrauch zu schaffen, die kompakt aufgebaut ist und energiesparend sowie hygienisch betrieben werden kann.

Zur Lösung dieser Aufgabe ist erfindungsgemäß vorgesehen, dass die Schwenkachse als erste Antriebswelle zum Verschwenken der Teigwalze ausgebildet ist, und dass auf mindestens einer Seite des Gehäuses eine zweite Antriebswelle für den rotierenden Antrieb der Teigwalze koaxial zu der Schwenkachse gelagert ist.

Durch die Anordnung von zwei zueinander koaxialen Antriebswellen wird eine kompakte und energiesparende Bauweise ermöglicht, wodurch eine Baumkuchenbackvorrichtung für den Haushaltsgebrauch geschaffen werden kann.

Die koaxiale Durchführung der Antriebswellen durch das Gehäuse vermeidet Öffnungen im Backraum, die einen Energieverlust bewirken, ein ungleichförmiges Backergebnis zur Folge haben können und die eine Verbrennungsgefahr und/oder eine Verschmutzungsquelle darstellen.

Die zweite Antriebswelle ist vorzugsweise auf der ersten Antriebswelle gelagert.

Bei einer vorteilhaften Weiterbildung ist vorgesehen, dass das Gehäuse eine integrierte Teigschale aufweist, wobei die Teigwalze von einer Aufheiz- und Backposition in der Nähe der Heizeinrichtung in eine Teigaufnahmeposition oberhalb einer Teigschale schwenkbar ist. Vorzugsweise kann die Teigwalze rotierend in die Teigmasse eintauchen. Hierzu muss lediglich die erste Antriebswelle beispielsweise mit einem Hebel oder einem motorischen Antrieb in unterschiedliche Schwenkpositionen verschwenkt werden können.

Besonders bevorzugt weist das Gehäuse eine für den Backbetrieb herausfahrbare Schublade, die eine die Teigmasse enthaltende, vorzugsweise auswechselbare Teigschale trägt.

Die aus dem Gehäuse herausfahrbare Schublade ermöglicht ebenfalls eine kompakte Bauweise der Backvorrichtung, so dass diese für den Haushaltsgebrauch geeignet ist. Die Schublade kann bis zu einer vorbestimmten Anschlagposition herausgezogen werden, so dass die die Teigmasse enthaltende Teigschale sich automatisch in der richtigen Position für die Teigwalze befindet.

Vorzugsweise ist vorgesehen, dass mindestens einer der Schwenkarme Antriebsmittel zum Antrieb der an dem freien Ende der Schwenkarme gelagerten Teigwalze aufweist. Mit Hilfe der an dem Schwenkarm angeordneten Antriebsmittel kann die rotierende Bewegung auf die Teigwalze übertragen werden, ohne dass ein Antriebsmotor der Hitze in dem Backraum oder stark wechselnden Temperaturen ausgesetzt wäre.

Bevorzugt verlaufen die Antriebsmittel in oder an dem Schwenkarm. Die Antriebsmittel können z.B. Kettengetriebe, Zahnriemengetriebe oder Kegelradgetriebe ähnlich einem Königswellenantrieb sein. Bei einer Anordnung innerhalb des Schwenkarms oder bei einer Verkleidung der Antriebsmittel sind diese auch gegen Hitzeeinwirkung und Verschmutzung geschützt.

Die Schwenkarme sind vorzugsweise innerhalb des Backraums angeordnet.

Bei einer bevorzugten Ausführungsform ist vorgesehen, dass die in dem Gehäuse gelagerte erste Antriebswelle zum Verschwenken der Teigwalze zumindest an einer Seite des Gehäuses heraustritt und drehfest mit einem Schwenkhebel oder Antrieb zum Einstellen und Arretieren der Schwenkposition der Teigwalze verbunden ist. Mit Hilfe des Schwenkhebels können unterschiedliche Schwenkpositionen sowohl in der Teigaufnahmestellung als auch in der Backstellung eingestellt werden. Der Schwenkhebel kann in unterschiedlichen Rastpositionen arretiert werden. Alternativ kann die Teigwalze über den Schwenkhebel und mit Hilfe einer koaxial zu der Antriebswelle angeordneten Bremse an der ersten Antriebswelle in vorbestimmten Positionen gehalten werden.

Die Heizeinrichtung besteht vorzugsweise aus mehreren parallel zur Teigwalze verlaufenden Heizstäben, die vorzugsweise im oberen, hinteren und/oder unteren Backraum angeordnet sind. Diese Heizstäbe können im Backraum im Querschnitt betrachtet bogenförmig angeordnet sein, so dass sie einen im Wesentlichen ähnlichen Abstand von dem sich aufbauenden Baumkuchen haben. Anstelle von elektrischen Heizelementen, wie z.B. Quarzstäben oder heat-pipes (Widerstands-Heizstäben), kann auch eine Gasheizung mit offener Flamme oder eine Beheizung mit Holzkohle zum Einsatz kommen.

Vorzugsweise ist die zumindest dem Backraum zugewandte Rückwand und/oder Bodenwand des Gehäuses reflektierend. Besonders bevorzugt ist eine spiegelnde Rückwand- oder Bodenfläche.

Die Drehgeschwindigkeit der Teigwalze ist in Stufen oder stufenlos einstellbar. Bevorzugt wird ein 12 Volt - Antriebsmotor mit vorgeschaltetem Regeltransformator verwendet.

Das Gehäuse weist zumindest seitlich doppelwandige Außenwände auf, die der Isolierung dienen. Bei einer bevorzugten Ausführungsform können die äußeren Wände der doppelwandigen Außenwand mit Lüftungsschlitzen versehen sein.

Auf mindestens einer Seite des Gehäuses kann in dem Zwischenraum einer doppelwandigen Außenwand der Motor und das Getriebe für die zweite Antriebswelle des Teigwalzenantriebs und/oder die Drehzahlsteuerung für den Motor und/oder die Temperatursteuerung für die Heizeinrichtung angeordnet sein.

Im Folgenden wird unter Bezugnahme auf die Zeichnungen ein Ausführungsbeispiel der Erfindung näher erläutert.

Es zeigen:
- Fig. 1: eine Backvorrichtung für Baumkuchen für den Haushaltsgebrauch,
- Fig. 2: die Backvorrichtung mit geöffneter Frontklappe und herausgezogener Schublade,
- Fig. 3: eine Seitenansicht des Gehäuses mit abgenommener Außenwand, und
- Fig. 4: Ansicht des Antriebs für die Teigwalze.

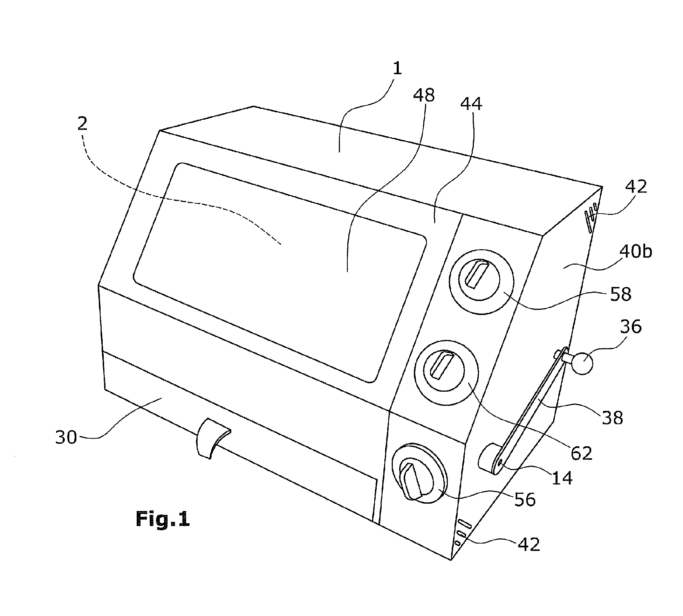

Fig. 1 ist eine perspektivische Ansicht der Backvorrichtung für Baumkuchen für den Haushaltsgebrauch. Die Backvorrichtung hat ein Gehäuse 1, das einen Backraum 2 umschließt, der über eine Tür, vorzugsweise eine Schwenkklappe 44 mit einem hitzefestem Sichtfenster 48 zugänglich ist. Das Sichtfenster 48 kann eine doppelt verglaste Sicherheitsglasscheibe aufweisen mit einer zwischen den Scheiben zirkulierenden Luft-Isolierschicht. Dabei ist ein offener Zwischenraum zwischen den Scheiben vorgesehen, der nicht luftdicht verschlossen ist.

In dem Backraum ist in einem unteren und hinteren Bereich eine Heizeinrichtung 4 angeordnet, die beispielsweise aus Infrarotheizelementen, z.B. Quarzstäben, oder aus elektrischen Widerstands-Heizstäben bestehen kann.

Alternativ kann auch eine Beheizung mit Gas oder Kohle vorgesehen sein. Die Heizeinrichtung 4 kann auf unterschiedliche Leistungsstufen eingestellt werden, und zusätzlich eine Temperaturregelung aufweisen, mit deren Hilfe ein voreingestelltes Temperaturniveau eingehalten werden kann.

Eine Teigwalze 6 zum Herstellen von Baumkuchen ist mit Hilfe einer ersten Antriebswelle 14 um eine Schwenkachse 12 verschwenkbar. Die erste Antriebswelle 14 ist in den seitlichen Außenwänden 40 des Gehäuses gelagert, wobei zwei Schwenkarme 10 an den Enden der ersten Antriebswelle 14 innerhalb des Backraums 2 drehfest mit der ersten Antriebswelle 14 verbunden sind. An ihren freien Enden 8 ist die verschwenkbare Teigwalze 6 zwischen den zwei Schwenkarmen 10 auswechselbar und drehbar gelagert. Die Teigwalze 6 kann vorzugsweise in einem Schwenkzustand, in dem die Teigwalze 6 nach außen aus dem Gehäuse 1 vorsteht, durch leichtes Spreizen der Schwenkarme 10 oder durch ein federndes Achselement, das in einen Schwenkarm 10 eingreift, aus der Lagerung in den Schwenkarmen 10 ausgekoppelt werden, um den Baumkuchen im fertiggestellten Zustand von der Teigwalze 6 abnehmen zu können.

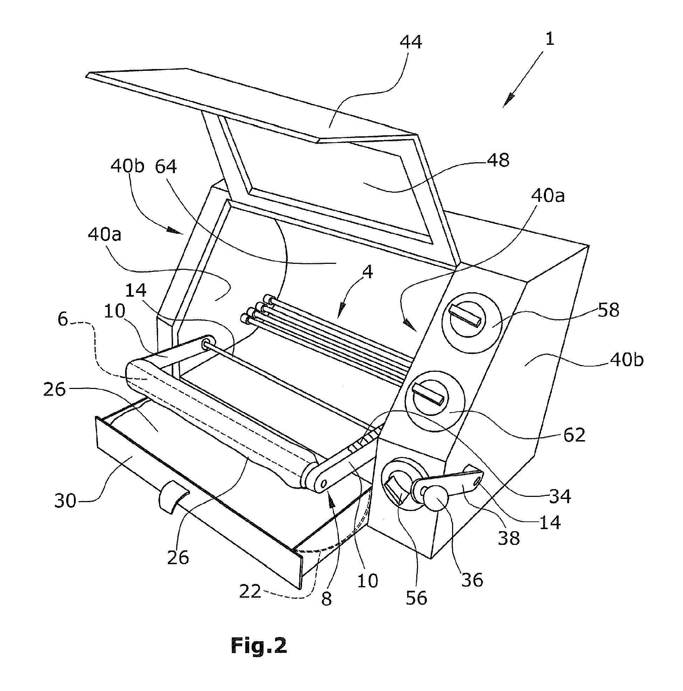

Ist die Teigwalze 6 nach vorne verschwenkt, ist sie, wie am besten aus Fig. 2 ersichtlich, oberhalb einer Teigschale 22 angeordnet. Die Teigschale 22 enthält die für das Backen erforderliche Teigmasse 26, wobei die Teigschale 22 von einer aus dem Gehäuse 1 herausziehbaren Schublade 30 getragen wird. Demzufolge kann die Teigschale 22 zum Reinigen oder zum Austauschen gegen eine andere Teigschale 22 mit einer andersartigen Teig- oder Auftragsmasse 26 aus der Schublade 30 entfernt werden.

Bei nicht gebrauchter Backvorrichtung kann die Schublade 30 mit der Teigschale 22 in das Gehäuse 1 platzsparend hineingeschoben werden.

Auf der in Fig. 2 rechten Seite der Teigwalze 6 ist in dem Tragarm 10 ein Antriebsmittel 34 zum Antrieb der an dem freien Ende 8 der Schwenkarme 10 gelagerten Teigwalze 6 angeordnet.

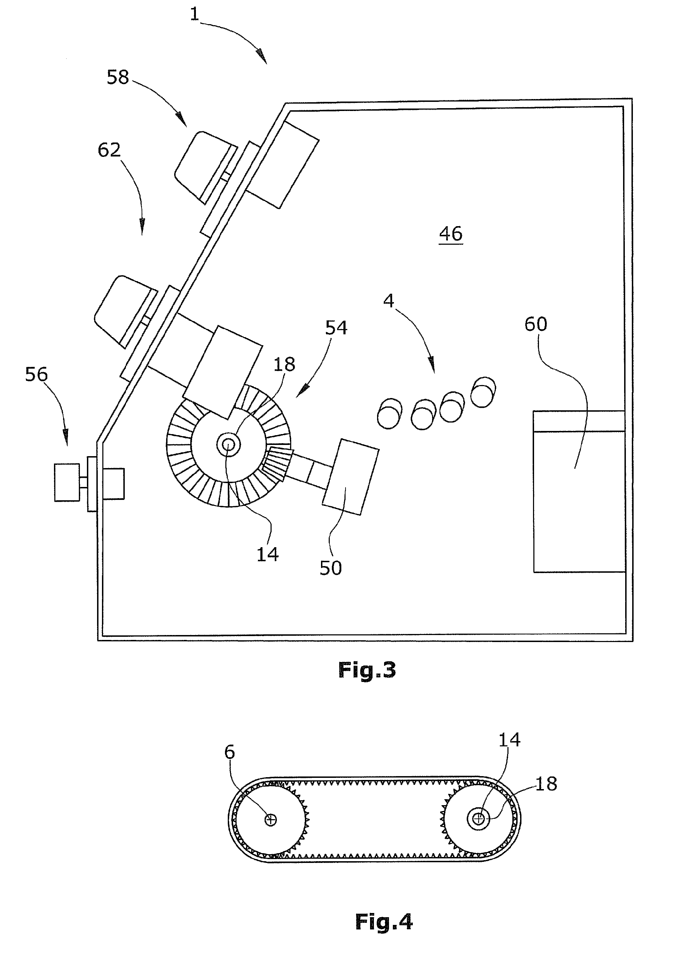

Das Antriebsmittel 34 kann beispielsweise aus einem Kettengetriebe oder einem Riemengetriebe oder einem Kegelradgetriebe in der Art eines Königswellenantriebs bestehen, wobei das Antriebsmittel 34 vorzugsweise zum Schutz gegen Hitze und Schmutz verkleidet ist (Fig. 4).

Der mit dem Antriebsmittel 34 versehene Schwenkarm 10 hat an seinem freien Ende 8 z.B. ein Ritzel für den Kettenantrieb, das formschlüssig, z.B. über eine Vierkantverbindung mit der Teigwalze 6 lösbar verbunden ist. Die erste Antriebswelle 14 zum Verschwenken der Schwenkarme 10 mit der Teigwalze 6 weist ebenfalls ein Ritzel für den Kettenantrieb auf, das auf einer zweiten Antriebswelle 18 drehfest für den rotierenden Antrieb der Teigwalze 6 verbunden ist. Die erste Antriebswelle 14 und die zweite Antriebswelle 18 sind koaxial zu der Schwenkachse 12 in einer ersten seitlichen Außenwand 40a gelagert, wobei die zweite Antriebswelle 18 auf der ersten Antriebswelle 14 drehbar gelagert ist.

Die zweite Antriebswelle 18 endet in einem Zwischenraum 46 der doppelwandigen Außenwand 40 und ist dort über ein Kegelradgetriebe 54 mit einem Motor 50 gekoppelt, der mit Hilfe einer Drehzahlsteuerung 56 vorzugsweise stufenlos oder in drei bis vier Stufen regelbar ist. Der Motor 50 ist beispielsweise ein 12 Volt - Antriebsmotor, dessen Drehgeschwindigkeit mit Hilfe eines regelbaren Transformators 60 einstellbar ist. Der Zwischenraum 46 enthält daher außer dem Kegelradgetriebe 54 den Motor 50, den Transformator 60, die Drehzahlsteuerung 56 und eine thermostatische Temperatursteuerung 58, sowie einen Schalter 62 zur Einstellung unterschiedlicher Heizstufen durch Zuschalten aller oder nur eines Teils der Heizstäbe. Der Zwischenraum 46 ist mit einer zweiten äußeren Außenwand 40b verkleidet, die an ihren unteren und oberen Enden mit Lüftungsschlitzen 42 versehen sein kann.

Die erste Antriebswelle 14 zum Verschwenken der Schwenkarme 10 mit der Teigwalze 6 ist über den Zwischenraum 46 hinaus auch durch die äußere Außenwand 40b hindurchgeführt und ist außerhalb des Gehäuses 1 drehfest mit einem Schwenkhebel 38 zum Einstellen und Arretieren unterschiedlicher Schwenkpositionen der Teigwalze 6 gekoppelt. Mit Hilfe des Schwenkhebels 38, der an seinem freien Ende einen Bedienungsknauf 36 aufweist, kann die Teigwalze 6 von einer Aufheiz- und Backposition in der Nähe der Heizeinrichtung 4 in eine Teigaufnahmeposition oberhalb der Teigschale 22 verschwenkt werden, in der die Teigwalze 6 bei herausgefahrener Schublade 30 rotierend in die Teigmasse 26 eintauchen kann.

Die doppelwandige Ausführung der Außenwände 40 dient der Isolierung des Gehäuses 1, damit die berührbaren Stellen des Gehäuses 1 keine Temperaturen annehmen, bei denen Personen Verbrennungen erleiden können. Der Backraum 2 wird vorzugsweise aus einem rostfreien Stahl oder einem Weißblech mit galvanisierter Zinnoberfläche hergestellt. Die dem Backraum 2 zugewandte Rück- oder Bodenwand 64 kann reflektierend, vorzugsweise spiegelnd ausgebildet sein, um einerseits ein Maximum der Wärmestrahlung zu reflektieren und andererseits das Gehäuse 1 nicht an seinen Außenwänden zu stark zu erhitzen. Durch eine spezielle Formgebung, z.B. Abkantungen oder durch Tiefziehen erzeugten Strukturen können die Bleche und Wände stabil gestaltet werden. Außerdem ist eine Spiegelfläche sehr gut von heruntergetropfter angebackener Teigmasse zu reinigen.

Auf der Vorderseite des Gehäuses 1 sind die Bedienelemente für die Drehzahlsteuerung 56, die Temperatursteuerung 58, sowie für die Auswahl der Heizleistung 62 (nicht zwingend erforderlich) angeordnet.

Zum Herstellen eines Baumkuchens wird nach dem Öffnen der vorzugsweise verschwenkbaren Frontklappe 44 zunächst die Schublade 30 herausgezogen und Teigmasse 26 in die Teigschale 22 eingefüllt. Anschließend wird die Teigwalze 6 in eine Aufheizposition in die Nähe der Heizeinrichtung 4 gebracht und dort auf eine voreingestellte Backtemperatur gebracht. Nach dem Aufheizen der Teigwalze 6 wird diese z.B. mit Hilfe eines Pinsels eingefettet und mit Hilfe des Schwenkhebels 38 nach vorne in eine Teigaufnahmeposition oberhalb der Teigschale 22 verschwenkt. Vorzugsweise kann die Teigwalze 6 auch mit Alufolie oder Backpapier umwickelt werden, was ein leichteres Abziehen des fertig gebackenen Baumkuchens ermöglicht. In dieser Position kann die Teigwalze 6 rotierend in die Teigmasse 26 eintauchen oder die Teigmasse 26 kann mit Hilfe beispielsweise eines Schöpflöffels auf die rotierende Teigwalze 6 aufgetragen werden. Anschließend wird die Teigwalze 6 mit der aufgetragenen Teigmasse 26 in eine Backposition in der Nähe der Heizeinrichtung 4 geschwenkt und ein erster Backvorgang mit rotierender Teigwalze 6 ausgeführt. Nach Abschluss des ersten Backvorgangs wiederholen sich die vorgenannten Schritte des Auftragens der Teigmasse 26 und des Backens bis der Baumkuchen in mehreren Schichten fertiggestellt ist.

Ist der Baumkuchen abgekühlt, kann er in der vorderen Schwenkstellung aus seiner Lagerung zwischen den Schwenkarmen 10 entfernt werden, um den fertigen Baumkuchen von der Teigwalze 6 abnehmen zu können.

## Patentansprüche

1. Backvorrichtung für Baumkuchen für den Haushaltsgebrauch, mit einem Gehäuse (1), das einen Backraum (2) umschließt, mit einer Heizeinrichtung (4) in dem Backraum (2), mit einer gegenüber der Heizeinrichtung (4) in dem Backraum (2) verschwenkbaren Teigwalze (6), die zwischen den freien Enden (8) von zwei Schwenkarmen (10) auswechselbar gelagert ist und um eine in dem Gehäuse (1) gelagerten Schwenkachse (12) für die Schwenkarme (10) verschwenkbar ist, wobei die Teigwalze (6) rotierend antreibbar ist,
**dadurch gekennzeichnet,**
**dass** die Schwenkachse (12) als erste Antriebswelle (14) zum Verschwenken der Teigwalze (6) ausgebildet ist, und
**dass** auf mindestens einer Seite des Gehäuses (1) eine zweite Antriebswelle (18) für den rotierenden Antrieb der Teigwalze (6) koaxial zu der Schwenkachse (12) gelagert ist.

2. Vorrichtung nach Anspruch 1, **dadurch gekennzeichnet, dass** das Gehäuse (1) eine integrierte Teigschale (22) zur Aufnahme von Teigmasse (26) aufweist, und dass die Teigwalze (6) von einer Aufheiz- und Backposition in der Nähe der Heizeinrichtung (4) in eine Teigaufnahmeposition oberhalb einer Teigschale (22) schwenkbar ist.

3. Vorrichtung nach Anspruch 1 oder 2, **dadurch gekennzeichnet, dass** das Gehäuse (1) eine für den Betrieb herausfahrbare Schublade (30) aufweist, die eine die Teigmasse (26) enthaltende, vorzugsweise auswechselbare Teigschale (22) trägt.

4. Backvorrichtung für Baumkuchen für den Haushaltsgebrauch, mit einem Gehäuse (1), das einen Backraum (2) umschließt, mit einer Heizeinrichtung (4) in dem Backraum (2), mit einer gegenüber der Heizeinrichtung (4) in dem Backraum (2) verschwenkbaren Teigwalze (6), die zwischen den freien Enden (8) von zwei Schwenkarmen (10) auswechselbar gelagert ist und um eine in dem Gehäuse (1) gelagerten Schwenkachse (12) für die Schwenkarme (10) verschwenkbar ist, wobei die Teigwalze (6) antreibbar ist,
**dadurch gekennzeichnet,**
**dass** das Gehäuse (1) eine für den Betrieb herausfahrbare Schublade (30) aufweist, die eine die Teigmasse (26) enthaltende Teigschale (22) trägt, und
**dass** die Teigwalze (6) von einer Aufheiz- und Backposition in der Nähe der Heizeinrichtung (4) in eine Teigaufnahmeposition oberhalb der Teigschale (22) schwenkbar ist, in der die Teigwalze (6) rotierend in die Teigmasse (26) eintaucht.

5. Vorrichtung nach Anspruch 4, **dadurch gekennzeichnet, dass** die Schwenkachse (12) als erste Antriebswelle (14) zum Verschwenken der Teigwalze (6) ausgebildet ist, und dass auf mindestens einer Seite des Gehäuses (1) eine zweite Antriebswelle (18) für den Antrieb der Teigwalze (6) koaxial zu der Schwenkachse (12) gelagert ist.

6. Vorrichtung nach einem der Ansprüche 1 bis 5, **dadurch gekennzeichnet, dass** mindestens einer der Schwenkarme (10) Antriebsmittel (34) zum Antrieb der an dem freien Ende (8) der Schwenkarme (10) gelagerten Teigwalze (6) aufweist.

7. Vorrichtung nach einem der Ansprüche 1 bis 6, **dadurch gekennzeichnet, dass** die Schwenkarme (10) innerhalb des Backraums (2) angeordnet sind.

8. Vorrichtung nach einem der Ansprüche 1 bis 7, **dadurch gekennzeichnet, dass** die in dem Gehäuse (1) gelagerte erste Antriebswelle (14) zum Verschwenken der Teigwalze (6) zumindest an einer Seite des Gehäuses (1) heraustritt und drehfest mit einem Schwenkhebel (38) oder Antrieb zum Einstellen und Arretieren der Schwenkposition der Teigwalze (6) verbunden ist.

9. Vorrichtung nach einem der Ansprüche 1 bis 8, **dadurch gekennzeichnet, dass** die Heizeinrichtung (4) aus mehreren parallel zur Teigwalze (6) verlaufenden Heizstäben besteht, die im hinteren Backraum (2) im Querschnitt betrachtet vorzugsweise bogenförmig angeordnet sind.

10. Vorrichtung nach einem der Ansprüche 1 bis 9, **dadurch gekennzeichnet, dass** die dem Backraum (2) zugewandte Rück- oder Bodenwand (64) des Gehäuses (1) reflektierend, vorzugsweise spiegelnd, ist.

11. Vorrichtung nach einem der Ansprüche 1 bis 10, **dadurch gekennzeichnet, dass** die Drehgeschwindigkeit der Teigwalze (6) einstellbar ist.

12. Vorrichtung nach einem der Ansprüche 1 bis 11, **dadurch gekennzeichnet, dass** zumindest die seitlichen Außenwände (40) doppelwandig sind, und dass in den äußeren Wänden der Außenwände (40) Lüftungsschlitze (42) angeordnet sind.

13. Vorrichtung nach einem der Ansprüche 1 bis 12, **dadurch gekennzeichnet, dass** das Gehäuse (1) eine den Backraum (2) nach vorne abschließende Schwenkklappe (44) mit einem Sichtfenster (48) aufweist.

14. Vorrichtung nach einem der Ansprüche 1 bis 13, **dadurch gekennzeichnet, dass** das Gehäuse (1) auf mindestens einer Seite in dem Zwischenraum (46) einer doppelwandigen Außenwand (40) den Motor (50) und das Getriebe (54) für die zweite Antriebswelle (18) des Teigwalzenantriebs und/oder die Drehzahlsteuerung (56) für den Motor (50) und/oder die Temperatursteuerung (58) für die Heizeinrichtung (4) aufnimmt.
